Europäisches Patentamt

European Patent Office

Office européen des brevets

(19)

(11) **EP 1 088 300 B1**

(12) **EUROPÄISCHE PATENTSCHRIFT**

(45) Veröffentlichungstag und Bekanntmachung des Hinweises auf die Patenterteilung:
**20.11.2002 Patentblatt 2002/47**

(21) Anmeldenummer: **99924646.5**

(22) Anmeldetag: **21.06.1999**

(51) Int Cl.$^7$: **G10L 19/00**

(86) Internationale Anmeldenummer:
**PCT/CH99/00269**

(87) Internationale Veröffentlichungsnummer:
**WO 00/000962 (06.01.2000 Gazette 2000/01)**

(54) **VERFAHREN ZUR DURCHFÜHRUNG EINER MASCHINENGESTÜTZTEN BEURTEILUNG DER ÜBERTRAGUNGSQUALITÄT VON AUDIOSIGNALEN**

METHOD FOR EXECUTING AUTOMATIC EVALUATION OF TRANSMISSION QUALITY OF AUDIO SIGNALS

PROCEDE D'EXECUTION D'UNE EVALUATION AUTOMATISEE DE LA QUALITE DE TRANSMISSION DE SIGNAUX AUDIO

(84) Benannte Vertragsstaaten:
**CH DE ES FR GB LI SE**

(30) Priorität: **26.06.1998 EP 98810589**

(43) Veröffentlichungstag der Anmeldung:
**04.04.2001 Patentblatt 2001/14**

(73) Patentinhaber: **Ascom AG**
**3000 Bern 14 (CH)**

(72) Erfinder: **JURIC, Pero**
**CH-4512 Bellach (CH)**

(74) Vertreter:
**Roshardt, Werner Alfred, Dipl.-Phys. et al**
**Keller & Partner**
**Patentanwälte AG**
**Schmiedenplatz 5**
**Postfach**
**3000 Bern 7 (CH)**

(56) Entgegenhaltungen:
**US-A- 4 860 360**

- **LAM K H ET AL: "OBJECTIVE SPEECH MEASURE FOR CHINESE IN WIRELESS ENVIRONMENT" PROCEEDINGS OF THE INTERNATIONAL CONFERENCE ON ACOUSTICS, SPEECH, AND SIGNAL PROCESSING (ICASSP), DETROIT, MAY 9 - 12, 1995 SPEECH, Bd. 1, 9. Mai 1995 (1995-05-09), Seiten 277-280, XP000657984 INSTITUTE OF ELECTRICAL AND ELECTRONICS ENGINEERS**
- **HANSEN J H L ET AL: "OBJECTIVE SPEECH QUALITY ASSESSMENT AND THE RPE-LTP CODING ALGORITHM IN DIFFERENT NOISE AND LANGUAGE CONDITIONS" JOURNAL OF THE ACOUSTICAL SOCIETY OF AMERICA, Bd. 97, Nr. 1, 1. Januar 1995 (1995-01-01), Seiten 609-627, XP000491242**
- **SHIHUA WANG ET AL: "AN OBJECTIVE MEASURE FOR PREDICTING SUBJECTIVE QUALITY OF SPEECH CODERS" IEEE JOURNAL ON SELECTED AREAS IN COMMUNICATIONS, Bd. 10, Nr. 5, 1. Juni 1992 (1992-06-01), Seiten 819-829, XP000274717**

## Beschreibung

### Technisches Gebiet

Die Erfindung betrifft ein Verfahren zur Durchführung einer maschinengestützten Beurteilung der Übertragungsqualität von Audiosignalen, insbesondere von Sprachsignalen, wobei in einen Frequenzbereich Spektren eines zu übertragenden Quellsignals und eines übertragenen Empfangssignals bestimmt werden.

### Stand der Technik

Die Beurteilung der Übertragungsqualität von Sprachkanälen gewinnt mit der wachsenden Verbreitung und geografischen Ausdehnung der Mobilfunktelefonie zunehmend an Bedeutung. Gesucht ist ein Verfahren, welches objektiv (d.h. nicht von der Einschätzung einer spezifischen Person abhängig) ist und automatisiert ablaufen kann.

Die perfekte Übertragung von Sprache über einen Telekommunikationskanal im standardisierten Frequenzband 0.3 - 3.4 kHz ergibt eine Satzverständlichkeit von ca. 98%. Die Einführung der digitalen Mobilfunknetze mit Sprachcodierern in den Endgeräten kann aber die Verständlichkeit der Sprache stark beeinträchtigen. Die Ermittlung des Masses der Beeinträchtigung bietet allerdings gewisse Schwierigkeiten.

Sprachqualität ist ein undeutlicher Begriff im Vergleich beispielsweise zur Bitrate, zum Echo oder zur Lautstärke. Da die Kundenzufriedenheit direkt mit der Güte der übertragenen Sprache gemessen werden kann, müssen Codierverfahren bezüglich ihrer Sprachqualität ausgewählt und optimiert werden. Zur Beurteilung eines Sprachcodierverfahrens werden üblicherweise sehr aufwendige auditive Tests durchgeführt. Die Resultate sind dabei kaum reproduzierbar und hängen von der Motivation der Testhörer ab. Daher ist ein instrumenteller Ersatz gesucht, der durch geeignete physikalische Messungen die Sprachgütemerkmale misst, die mit subjektiv erhaltenen Ergebnissen (Mean Opinion Score, MOS) möglichst gut korrelieren.

Aus der EP 0 644 674 A2 ist ein Verfahren zum Beurteilen der Übertragungsqualität einer Sprach-Übertragungsstrecke bekannt, das auf automatischer Ebene eine Beurteilung ermöglicht, die stark mit dem menschlichen Empfinden korreliert. D. h. das System kann eine Bewertung der Übertragungsqualität durchführen und einen Massstab anlegen, wie er von einem geschulten Testhörer angewendet würde. Der Kerngedanke besteht in der Anwendung eines neuronalen Netzwerkes. Dieses wird mit einer Sprachprobe trainiert. Im Endeffekt findet eine integrale Qualitätsbeurteilung statt. Es wird nicht nach den Ursachen der Qualitätseinbusse gefragt.

Moderne Sprachcodierverfahren führen eine Datenkompression durch und benutzen sehr niedrige Bitraten. Deswegen versagen einfache bekannte objektive Verfahren, wie beispielsweise das Signal-Rauschverhältnis (SNR).

In dem Artikel "Objective speech quality assessment and the RPE-LTP coding algorithm in different noise and language conditions" - Journal of the Acoustical Society of America (January 1995) von John H. L. Hansen et al. werden drei objektive Methoden zur Bestimmung der Sprachqualität, nämlich IS (Itakura-Saito), LAR (log-area-ratio) und WSS (weightedspectral slope) miteinander verglichen. Bei der IS Methode werden die spektralen Unterschiede gemessen basierend auf den All-Pole Modellen der originalen und der codierten Wellenformen. Die LAR Methode basiert auf den Unterschieden der LPC (linear prediction coefficients) des originalen und des codierten Sprachsignals. Und die WSS Methode schliesslich basiert auf einem Modell, bei welchem mit 36 überlappenden Filtern grosser Bandbreite das geglättete Kurzzeit-Spektrum des Sprachsignals geschätzt wird. Diese Verfahren sind sehr komplex und aufwendig und liefern nicht immer befriedigende Resultate.

### Darstellung der Erfindung

Aufgabe der Erfindung ist es, ein Verfahren der eingangs genannten Art anzugeben, welches unter Berücksichtigung des menschlichen Hörvorgangs eine objektive Beurteilung (Sprachqualitäts-Vorhersage) ermöglicht.

Die Lösung der Aufgabe ist durch die Merkmale des Anspruchs 1 definiert. Gemäss der Erfindung wird zur Beurteilung der Übertragungsqualität ein spektraler Ähnlichkeitswert bestimmt, welcher auf einer Berechnung der Kovarianz der Spektren von Quellsignal und Empfangssignal und einer Division der Kovarianz durch die Standardabweichungen der beiden genannten Spektren beruht.

Tests mit einer Reihe von bewerteten Sprachproben und dem zugehörigen auditiven Urteil (MOS) haben gezeigt, dass auf der Basis des erfindungsgemässen Verfahrens eine sehr hohe Korrelation mit den auditiven Werten erzielt werden kann. Im Vergleich mit der bekannten auf einem neuronalen Netz basierenden Methode hat das vorliegende Verfahren folgende Vorteile:

- Geringerer Bedarf an Speicher- und CPU-Mittel. Dies ist wichtig für eine Echtzeitimplementierung.

- Kein aufwendiges Systemtraining für den Einsatz neuer Sprachproben.

- Keine suboptimale systemimmanente Referenz. Die beste Sprachqualität, die mit diesem Mass gemessen werden kann, entspricht derjenigen der Sprachprobe.

Vorzugsweise wird der spektrale Ähnlichkeitswert mit einem Faktor gewichtet, welcher in Abhängigkeit vom Verhältnis der Energien der Spektren von Empfangs- zu Quellsignal den

Ähnlichkeitswert stärker reduziert, wenn die Energie des Empfangssignals grösser ist als diejenige des Quellsignals als wenn die Energie des Empfangssignals kleiner ist als diejenige des Quellsignals. Auf diese Weise werden zusätzliche Signalinhalte im Empfangssignal stärker negativ gewichtet als fehlende Signalinhalte.

Gemäss einer besonders bevorzugten Ausführungsform ist der Gewichtungsfaktor auch abhängig von der Signalenergie des Empfangssignals. Für jedes beliebige Verhältnis der Energien der Spektren von Empfangs- zu Quellsignal gilt, dass der Ähnlichkeitswert umso stärker reduziert wird, je höher die Signalenergie des Empfangssignals ist. Dadurch wird der Einfluss einer Störung im Empfangssignal auf den Ähnlichkeitswert abhängig von der Energie des Empfangssignals gesteuert. Dazu werden zumindest zwei Pegelfenster, eines unterhalb einer vorgegebenen Schwelle und eines oberhalb dieser Schwelle, definiert. Vorzugsweise werden oberhalb der Schwelle mehrere, insbesondere drei, Pegelfenster definiert. Je nach Pegelfenster, in welchem das Empfangssignal liegt, wird der Ähnlichkeitswert reduziert. Je höher der Pegel, desto stärker die Reduktion.

Grundsätzlich kann die Erfindung für beliebige Audiosignale angewendet werden. Enthalten die Audiosignale inaktive Phasen (wie es bei Sprachsignalen typischerweise der Fall ist), empfiehlt es sich, die Qualitätsbeurteilung für aktive und inaktive Phasen getrennt durchzuführen. Signalabschnitte, deren Energie die vorgegebene Schwelle überschreiten, werden der aktiven Phase zugeordnet, die übrigen Abschnitte werden als Pausen (inaktive Phasen) eingestuft. Die weiter oben beschriebene spektrale Ähnlichkeit wird nur für die aktiven Phasen berechnet.

Für die inaktiven Phasen (z.B. die Sprachpausen) kann eine Qualitätsfunktion angewendet werden, welche in Abhängigkeit von der Pausenenergie degressiv abnimmt:

$$A^{\frac{\log 10(Epa)}{\log 10(E\max)}}$$

A ist eine geeignete gewählte Konstante, Emax ist der größtmögliche Wert der Pausenenergie.

Die Gesamtqualität der Übertragung (d.h. die eigentliche Übertragungsqualität) ergibt sich aus einer gewichteten Linearkombination der Qualitäten der aktiven und der inaktiven Phase. Die Gewichtungsfaktoren hängen dabei vom Anteil der aktiven Phase am Gesamtsignal ab, und zwar in einer nicht-linearen, die aktive Phase bevorzugenden Weise. Bei einem Anteil von z.B. 50% kann die Qualität der aktiven Phase in der Grössenordnung von z.B. 90% liegen.

Pausen bzw. Störungen in den Pausen werden also separat und weniger stark als aktive Signalphasen beachtet. Dies trägt der Erkenntnis Rechnung, dass in Pausen im wesentlichen keine Information übertragen wird, dass es aber trotzdem als unangenehm empfunden wird, wenn in den Pausen Störungen auftreten.

Gemäss einer besonders bevorzugten Ausführungsform werden die zeitlichen Abtastwerte von Quell- und Empfangssignal in Datenrahmen zusammengefasst, welche einander um einige Millisekunden bis zu einigen Dutzend Millisekunden überlappen (z.B. 16 ms). Diese Überlappung bildet - zumindest teilweise - die dem menschlichen Hörsystem inhärente zeitliche Maskierung nach.

Eine weitgehend realistische Nachbildung der zeitlichen Maskierung ergibt sich dann, wenn zusätzlich - nach der Transformation in den Frequenzbereich - zum Spektrum des aktuellen Rahmens das abgeschwächte Spektrum des vorhergehenden addiert wird. Die spektralen Komponenten werden dabei vorzugsweise unterschiedlich gewichtet. Niederfrequente Komponenten des vorangegangenen Rahmens werden stärker gewichtet als höherfrequente.

Es empfiehlt sich, vor der Durchführung der zeitlichen Maskierung eine Kompression der Spektralkomponenten vorzunehmen, indem diese mit einem Wert $\alpha<1$ (z.B. $\alpha=0.3$) potenziert werden. Treten nämlich in einem Frequenzband gleichzeitig mehrere Frequenzen auf, erfolgt beim auditiven System eine Überreaktion, d.h. die Gesamtlautstärke wird als grösser als diejenige der Summe der einzelnen Frequenzen empfunden. Im Endeffekt bedeutet dies eine Kompression der Komponenten.

Eine weitere Massnahme, um eine gute Korrelation zwischen den Beurteilungsergebnissen des erfindungsgemässen Verfahrens und der subjektiven menschlichen Wahrnehmung zu erreichen, besteht darin, das Spektrum eines Rahmens mit einer asymmetrischen "Verschmierungsfunktion" zu falten. Diese mathematische Operation wird sowohl auf das Quell- als auch auf das Empfangssignal angewendet und zwar vor dem Bestimmen der Ähnlichkeit.

Die Verschmierungsfunktion ist in einem Frequenz-Lautheits-Diagramm vorzugsweise eine Dreiecksfunktion, deren linke Flanke steiler als deren rechte ist.

Vor der Faltung können die Spektren zusätzlich expandiert werden durch Potenzierung mit einem Wert $\varepsilon>1$ (z.B. $\varepsilon=4/3$). Damit wird die dem menschlichen Ohr charakteristische Lautheitsfunktion simuliert.

Aus der nachfolgenden Detailbeschreibung und der Gesamtheit der Patentansprüche ergeben sich weitere

**EP 1 088 300 B1**

vorteilhafte Ausführungsformen und Merkmalskombinationen der Erfindung.

**Kurze Beschreibung der Zeichnungen**

Die zur Erläuterung des Ausführungsbeispiels verwendeten Zeichnungen zeigen:

Fig. 1        ein grobes Blockschaltbild zur Erläuterung des Prinzips der Verarbeitung;

Fig. 2        ein Blockschaltbild der einzelnen Verfahrensschritte zur Durchführung der Qualitätsbeurteilung;

Fig. 3        ein Beispiel eines Hamming-Fensters;

Fig. 4        eine Darstellung der Gewichtungsfunktion zur Berechnung der Frequenz-Tonheit-Konvertierung;

Fig. 5        eine Darstellung des Frequenzgangs des Telefonfilters;

Fig. 6        eine Darstellung der Kurven gleicher Lautstärke für das ebene Schallfeld (Ln ist die Lautstärke und N die Lautheit);

Fig. 7        eine schematische Darstellung der zeitlichen Maskierung;

Fig. 8        eine Darstellung der Lautheitsfunktion (sone) in Abhängigkeit des Schallpegels (phon) eines 1 KHz-Tones;

Fig. 9        eine Darstellung der Verschmierungsfunktion;

Fig. 10      eine grafische Darstellung des Sprachkoeffizienten als Funktion des Sprachanteils im Quellsignal;

Fig. 11      eine grafische Darstellung der Qualität in der Pausenphase als Funktion der Sprachenergie in der Pausenphase;

Fig. 12      eine grafische Darstellung der Gain-Konstante als Funktion des Energieverhältnisses;

Fig. 13      eine grafische Darstellung der Gewichtungskoeffizienten zur Implementierung der zeitlichen Maskierung in Abhängigkeit von der Frequenzkomponente.

Grundsätzlich sind in den Figuren gleiche Teile mit gleichen Bezugszeichen versehen.

**Wege zur Ausführung der Erfindung**

Im folgenden wird ein konkretes Ausführungsbeispiel im einzelnen anhand der Figuren erläutert.

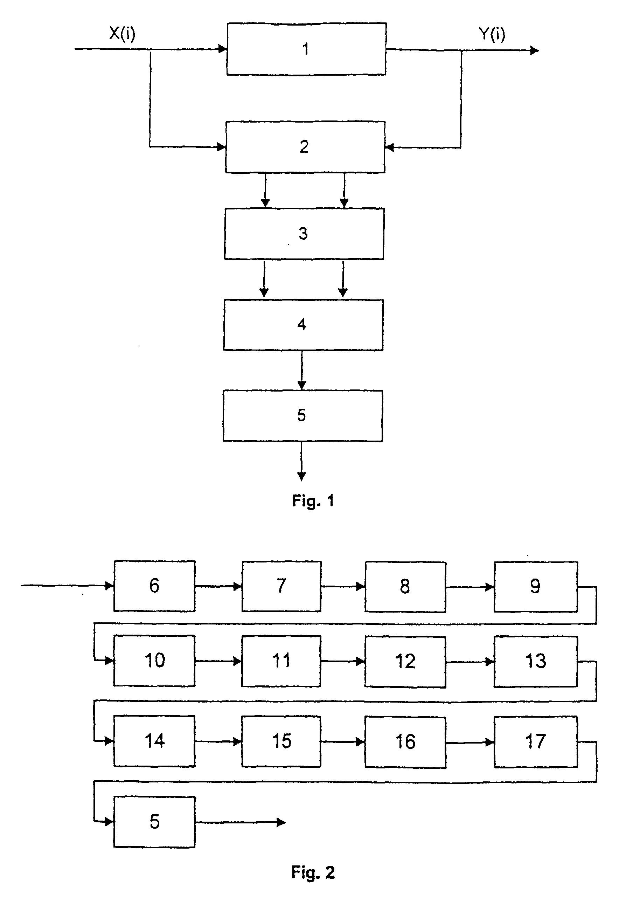

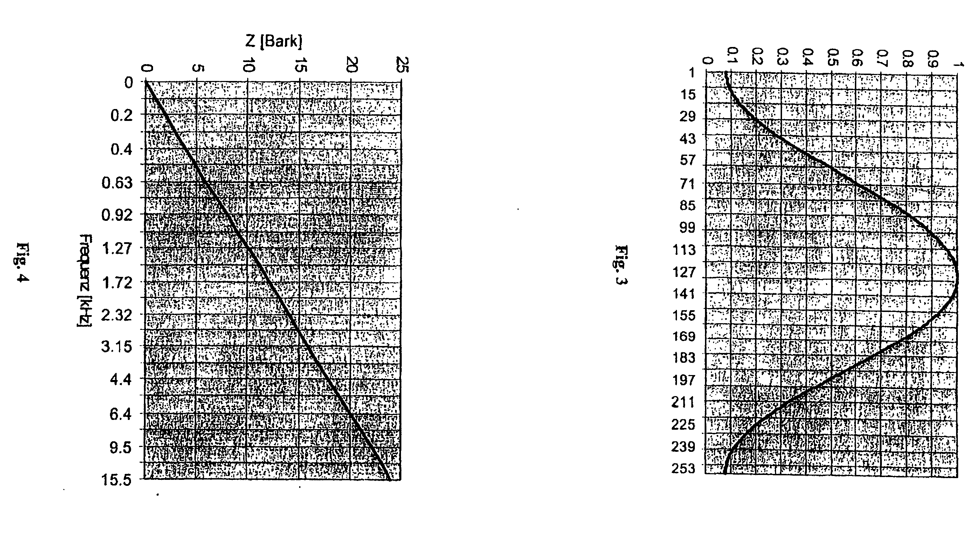

Fig. 1 zeigt das Prinzip der Verarbeitung. Als Quellsignal x(i) wird eine Sprachprobe verwendet. Es wird durch den Sprachcodierer 1 verarbeitet bzw. übertragen und in ein Empfangssignal y(i) (codiertes Sprachsignal) überführt. Die genannten Signale liegen in digitaler Form vor. Die Abtastfrequenz beträgt z.B. 8 kHz und die digitale Quantisierung 16 Bit. Datenformat ist vorzugsweise PCM (ohne Kompression).

Quell- und Empfangssignal werden separat einer Vorverarbeitung 2 und einer psychoakustischen Modellierung 3 unterworfen. Es folgt eine Abstandsberechnung 4, welche die Ähnlichkeit der Signale beurteilt. Schliesslich wird eine MOS Berechnung 5 durchgeführt, um ein mit der menschlichen Bewertung vergleichbares Resultat zu erhalten.

Fig. 2 verdeutlicht die im folgenden detailliert beschriebenen Abläufe. Quellsignal und Empfangssignal erfahren den selben Verarbeitungsweg. Der Einfachheit halber ist der Prozess nur einmal gezeichnet worden. Es ist aber klar, dass die beide Signale bis zur Bestimmung des Abstandsmasses separat behandelt werden.

Das Quellsignal basiert auf einem Satz, der so gewählt ist, dass seine Lauthäufigkeitsstatistik der gesprochenen Sprache möglichst gut entspricht. Um das Kontext-Hören zu unterbinden, verwendet man sinnleere Silben, sogenannte Logatome. Die Sprachprobe soll einen möglichst konstanten Sprachpegel besitzen. Die Länge der Sprachprobe liegt zwischen 3 und 8 Sekunden (typisch 5 Sekunden).

Signalvorbereitung: In einem ersten Schritt wird das Quellsignal in den Vektor x(i) und das Empfangssignal in den Vektor y(i) eingelesen. Die beiden Signale müssen zeit- und pegelmässig synchronisiert werden. Dann wird die Gleichstromkomponente entfernt, indem von jedem Abtastwert der Mittelwert abgezogen wird:

4

$$x(i) = x(i) - \frac{1}{N}\sum_{k=1}^{N}x(k) \qquad y(i) = y(i) - \frac{1}{N}\sum_{k=1}^{N}y(k) \qquad\qquad (1)$$

Weiter werden die Signale auf gemeinsame RMS (**R**oot **M**ean **S**quare)-Pegel normalisiert, weil der konstante Verstärkungsfaktor im Signal nicht berücksichtigt wird:

$$x(i) = x(i) \cdot \frac{1}{\sqrt{\dfrac{1}{N}\sum_{k=1}^{N}x(k)^2}} \qquad y(i) = y(i) \cdot \frac{1}{\sqrt{\dfrac{1}{N}\sum_{k=1}^{N}y(k)^2}} \qquad\qquad (2)$$

Als nächstes kommt die Rahmen-Bildung: Beide Signale werden in Segmente der Länge 32 ms aufgeteilt (256 Abtastwerte bei 8 kHz). Diese Rahmen sind die Verarbeitungseinheiten in allen späteren Verarbeitungsschritten. Die Rahmenüberlappung beträgt vorzugsweise 50% (128 Abtastwerte).

Nun folgt die Hamming-Fensterung 6 (vgl. Fig. 2). In einem ersten Verarbeitungsschritt wird der Rahmen einer zeitlichen Gewichtung unterzogen. Es wird ein sog. Hamming -Fenster (Fig. 3) generiert, mit welchem die Signalwerte eines Rahmens multipliziert werden.

$$hamm(k) = 0.54 - 0.46 \cdot \cos\left(\frac{2\pi(k-1)}{255}\right), \quad 1 \le k \le 255 \qquad\qquad (3)$$

Aufgabe der Fensterung ist es, ein zeitlich unbegrenztes Signal in ein zeitlich begrenztes Signal zu überführen, indem das zeitlich unbegrenzte Signal mit einer Fensterfunktion multipliziert wird, die ausserhalb eines gewissen Bereiches verschwindet (gleich Null ist).

$$x(i) = x(i)^*hamm(i), \quad y(i) = y(i)^*hamm(i), \qquad 1 \le i \le 255 \qquad\qquad (4)$$

Das Quellsignal x(t) in der Zeitdomäne wird jetzt mittels diskreter Fourier-Transformation (Fig. 2: DFT 7) in die Frequenzdomäne überführt. Für eine zeitdiskrete Wertefolge x(i) mit i=0,1,2,....,N-1, die durch die Fensterung entstanden ist, lautet die komplexe Fourier-Transformierte *C(j)* für das Quellsignal x(i) bei der Periode N:

$$c_x(j) = \sum_{n=0}^{N-1}x(i)\cdot\exp\left(-j\cdot\frac{2\pi}{N}\cdot n\cdot j\right) \quad 0 \le j \le N-1 \qquad\qquad (5)$$

Dasselbe wird für das kodierte Signal bzw. Empfangssignal y(i) gemacht:

$$c_y(j) = \sum_{n=0}^{N-1}y(i)\cdot\exp\left(-j\cdot\frac{2\pi}{N}\cdot n\cdot j\right) \quad 0 \le j \le N-1 \qquad\qquad (6)$$

Im nächsten Schritt wird der Betrag des Spektrums berechnet (Fig.2: Betragsbildung 8). Mit Index **x** ist immer das Quellsignal bezeichnet und mit **y** das Empfangssignal:

$$Px_j = \sqrt{c_x(j) \cdot conjg(c_x(j))}, \; Py_j = \sqrt{c_y(j) \cdot conjg(c_y(j))} \qquad (7)$$

Nun wird eine Einteilung in die kritischen Frequenzbänder vorgenommen (Fig. 2: Bark-Transformation 9).

Hier wird ein angepasstes Modell von E. Zwicker, Psychoakustik, 1982, eingesetzt. Die Basiliarmembrane im menschlichen Ohr teilt das Frequenzspektrum in kritische Frequenzgruppen ein. Diese Frequenzgruppen spielen eine wichtige Rolle bei der Lautstärkenempfindung. Bei tiefen Frequenzen haben die Frequenzgruppen eine konstante Bandbreite von 100 Hz, bei Frequenzen oberhalb 500 Hz steigt sie proportional mit der Frequenz (sie beträgt etwa 20% der jeweiligen Mittenfrequenz). Dies entspricht angenähert den Eigenschaften des menschlichen Gehörs, welches die Signale auch in Frequenzbändern verarbeitet, allerdings sind diese Bänder variabel, d.h. deren Mittenfrequenz richtet sich nach dem jeweiligen Schall-Ereignis.

Die folgende Tabelle zeigt den Zusammenhang zwischen Tonheit z, Frequenz f, Frequenzgruppenbreite ΔF, sowie FFT-Index. Die FFT-Indices entsprechen der FFT-Auflösung von 256. Nur die Bandbreite 100-4000 Hz ist interessant für die weitere Berechnung.

| Z [Bark] | F(low) [Hz] | ΔF [Hz] | FFT Index |
|---|---|---|---|
| 0 | 0 | 100 | |
| 1 | 100 | 100 | 3 |
| 2 | 200 | 100 | 6 |
| 3 | 300 | 100 | 9 |
| 4 | 400 | 100 | 13 |
| 5 | 510 | 110 | 16 |
| 6 | 630 | 120 | 20 |
| 7 | 770 | 140 | 25 |
| 8 | 920 | 150 | 29 |
| 9 | 1080 | 160 | 35 |
| 10 | 1270 | 190 | 41 |
| 11 | 1480 | 210 | 47 |
| 12 | 1720 | 240 | 55 |
| 13 | 2000 | 280 | 65 |
| 14 | 2320 | 320 | 74 |
| 15 | 2700 | 380 | 86 |
| 16 | 3150 | 450 | 101 |
| 17 | 3700 | 550 | 118 |
| 18 | 4400 | 700 | |
| 19 | 5300 | 900 | |
| 20 | 6400 | 1100 | |
| 21 | 7700 | 1300 | |
| 22 | 9500 | 1800 | |
| 23 | 12000 | 2500 | |
| 24 | 15500 | 3500 | |

Die hier angewandten Fenster stellen eine Vereinfachung dar. Alle Frequenzgruppen haben die Breite ΔZ(z) von 1 Bark. Die Tonheitsskala z in Bark wird gemäss folgender Formel berechnet:

$$Z = 13 \cdot \arctan(0.76 \cdot f) + 3.5 \cdot \arctan\left[\left(\frac{f}{7.5}\right)^2\right], \qquad (8)$$

wobei **f** in [kHz] und **Z** in [Bark].

Eine Tonheitsdifferenz von einem Bark entspricht ungefähr einem Abschnitt von 1.3 Millimetern auf der Basiliarmembran (150 Haarzellen). Die eigentliche Frequenz-Tonheit-Konvertierung kann einfach nach der folgenden Formel gemacht werden:

$$Px_i'[j] = \frac{1}{\Delta f_j} * \sum_{I_f[j]}^{I_l[j]} q(f) * Px_i[k], \; Py_i'[j] = \frac{1}{\Delta f_j} * \sum_{I_f[j]}^{I_l[j]} q(f) * Py_i[k] \quad (9)$$

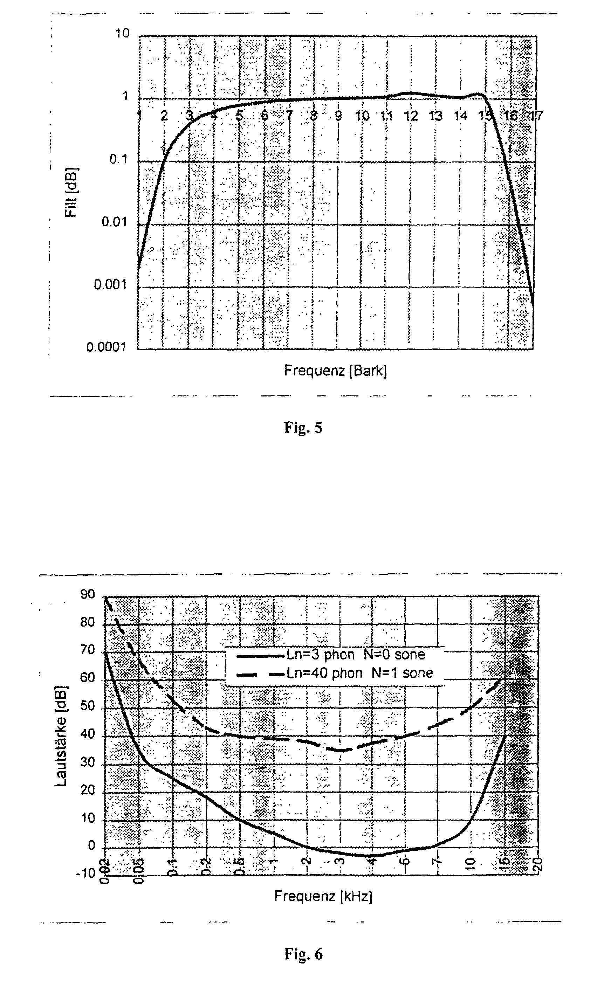

wobei $I_f[j]$ der Index vom ersten und $I_l[j]$ vom letzten Sample auf der Hertz-Skala für Band j ist. $\Delta f_j$ bezeichnet die Bandbreite im Band j in Hertz. q(f) ist die Gewichtungsfunktion (Fig. 5). Da die Diskrete Fourier-Transformation nur Werte des Spektrums an diskreten Stellen (Frequenzen) liefert, liegen die Bandgrenzen jeweils auf einer solchen Frequenz. Die Werte an den Bandgrenzen werden in jedem der benachbarten Fenster nur je halb gewichtet. Die Bandgrenzen liegen auf N*8000/256 Hz.

N = 3, 6, 9, 13, 16, 20, 25, 29, 35, 41, 47, 55, 65, 74, 86, 101, 118

Für die Telefonie-Bandbreite 0.3 - 3.4 kHz werden 17 Werte auf der Tonheitsskala benutzt, die dann der Erregung entsprechen. Von den resultierenden 128 FFT-Werten werden die ersten 2, welche dem Frequenzbereich 0 Hz bis 94 Hz, und die letzten 10, welche dem Frequenzbereich 3700 Hz bis 4000 Hz entsprechen, weggelassen.

Beide Signale werden jetzt mit einem Filter gefiltert, dessen Frequenzgang der Empfangskurve des entsprechenden Telefon-Sets entspricht (Fig. 2: Telefonband-Filterung 10):

$$Pfx_i[j] = Filt[j] \cdot Px'_i[j], \qquad Pfy_i[j] = Filt[j] \cdot Py''_i[j] \qquad (10)$$

wo *Filt[j]* die Frequenzantwort im Band j des Frequenzganges des Telefongerätes ist (definiert gemäss ITU-T Empfehlung Annex D/P.830).

In Fig. 5 sind die Werte (logarithmisch) eines solchen Filters grafisch dargestellt.

Optional können noch die Phon-Kurven berechnet werden (Fig. 2: Phon-Kurven-Berechnung 11). Dazu folgendes:

Als Lautstärke eines beliebigen Schalles ist derjenige Pegel eines 1 kHz-Tones bezeichnet, der bei frontalem Einfall auf die Versuchsperson in einer ebenen Welle die gleiche Lautstärkenempfindung bewirkt wie der zu messende Schall (vgl. E. Zwicker, Psychoakustik, 1982). So spricht man über die Kurven gleicher Lautstärke für verschiedene Frequenzen. Diese Kurven sind in Fig. 6 dargestellt.

In Fig. 6 sieht man z. B., dass ein 100 Hz-Ton bei einer Pegellautstärke von 3 phon einen Schallpegel von 25 dB besitzt. Der gleiche Ton besitzt jedoch für einen Lautstärkepegel von 40 phon einen Schallpegel von 50 dB. Man sieht auch, dass z. B. für einen 100 Hz-Ton der Schallpegel 30 dB stärker sein muss als für einen 4 kHz-Ton, damit beide eine gleiche Lautheit im Ohr erzeugen können. Eine Annäherung im erfindungsgemässen Modell wird erreicht, indem die Signale *Px* und *Py* mit einer komplementären Funktion multipliziert werden.

Da das menschliche Gehör beim gleichzeitigen Auftreten mehrerer Spektral-Anteile in einem Band überreagiert d.h. die Gesamtlautstärke als grösser als die lineare Summe der einzelnen Lautstärken empfindet, werden die Einzel-Spektralanteile komprimiert. Die komprimierte spezifische Lautheit hat die Einheit 1 Sone. Zur Durchführung der Phon-Sone-Transformation 12 (vgl. Fig. 2) wird im vorliegenden Fall die Erregung in Bark mit einem Exponent $\alpha$ = 0.3 komprimiert:

$$Px'_i[j] = (Pfx'_i[j])^{\alpha}, \; Py'_i[j] = (Pfy'_i[j])^{\alpha} \qquad (11)$$

Ein wichtiger Aspekt des bevorzugten Ausführungsbeispiels ist die Modellierung der zeitlichen Verdeckung.

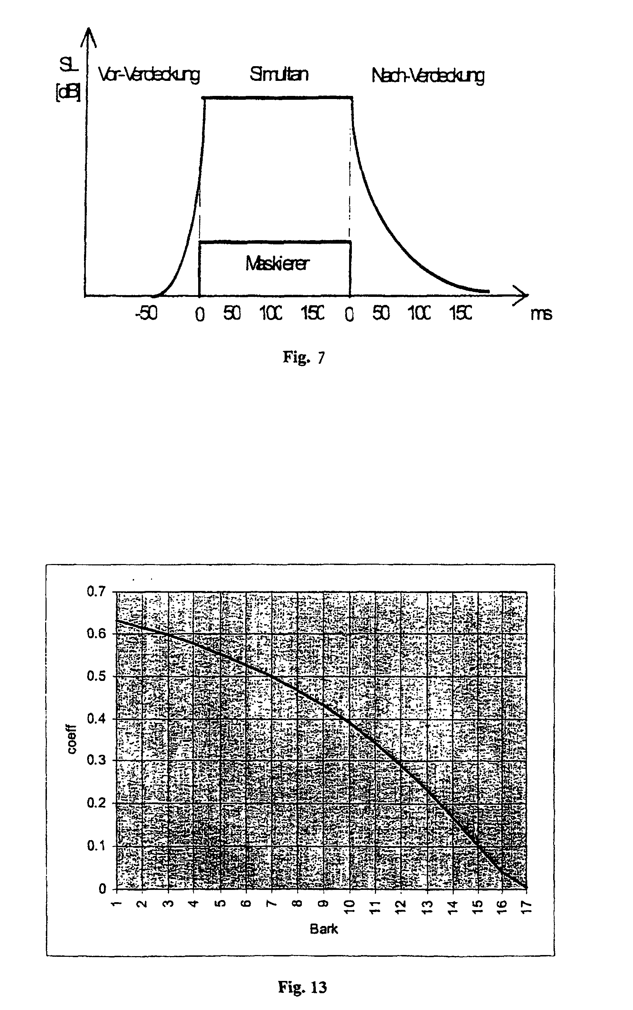

Das menschliche Ohr ist unfähig, zwei kurze Testschalle, die kurz nacheinander ankommen, zu unterscheiden. Die zeitabhängigen Vorgänge zeigt Fig. 7. Ein Maskierer von 200 ms Dauer verdeckt einen kurzen Tonimpuls. Der Zeitpunkt, wo der Maskierer beginnt, ist mit 0 bezeichnet. Links ist die Zeit negativ. Die zweite Zeitskala beginnt dort, wo der Maskierer endet. Es sind drei Zeitbereiche zu sehen. Vorverdeckung findet statt, bevor der Maskierer eingeschaltet wird. Unmittelbar danach ist die Simultanverdeckung und nach dem Ende des Maskierers ist die Nachverdeckungsphase. Für die Nachverdeckung gibt es eine logische Erklärung (Ausklingen). Die Vorverdeckung findet schon vor Einschalten des Maskierers statt. Die Hörempfindungen treten nicht sofort auf. Es wird eine Verarbeitungszeit benötigt, um die Empfindung zu erzeugen. Einem lauten Schall wird eine schnelle Verarbeitung zuerkannt und einem leisen Schall an der Hörschwelle eine längere Verarbeitungszeit. Die Vorverdeckung dauert etwa 20 ms und die Nachverdeckung 100 ms. Daher ist die Nachverdeckung der dominante Effekt. Die Nachverdeckung hängt von der Maskiererdauer und dem Spektrum des verdeckenden Schalles ab.

Eine grobe Annäherung der zeitlichen Verdeckung ist bereits durch die Rahmenüberlappung in der Signal-Vorverarbeitung erreicht. Bei der Rahmenlänge von 32 ms (256 Abtastwerte und 8 kHz Abtastfrequenz) ist die Überlappungszeit 16 ms (50%). Dies reicht für mittlere und hohe Frequenzen. Für tiefe Frequenzen ist diese Verdeckung viel länger (> 120 ms). Dieses wird nun als das Addieren des abgeschwächten Spektrums des vorangehenden Rahmens implementiert (Fig. 2: Zeitliche Verdeckung 15). Die Abschwächung ist dabei in jedem Frequenzband unterschiedlich:

$$Px_i''[j] = \frac{(Px_i'[j] + Px_{i-1}'[j] * coeff(j))}{1 + coeff(j)}, \; Py_i''[j] = \frac{(Py_i'[j] + Py_{i-1}'[j] * coeff(j))}{1 + coeff(j)} \tag{12}$$

wo coeff(j) die Gewichtungs-Koeffizienten sind, die nach folgender Formel berechnet werden:

$$coeff(j) = \exp\left(\frac{-\dfrac{FrameLength}{(2 \cdot Fc)}}{((2 \cdot NrOfBarks + 1) - 2 \cdot (j-1)) \cdot \eta}\right),$$

$$j = 1,2,3,...,NrOfBarks \tag{13}$$

wo *FrameLength* die Rahmenlänge in Abtastwerten ist z.B. 256, *NrOfBarks* ist die Anzahl Bark-Werte innerhalb eines Rahmens (hier z.B. 17). *Fc* ist die Abtastfrequenz und $\eta$ = 0.001.

Die Gewichtungskoeffizienten zur Implementierung der zeitlichen Maskierung in Abhängigkeit von der Frequenzkomponente sind beispielhaft in Fig. 13 dargestellt. Es ist deutlich erkennbar, dass die Gewichtungskoeffizienten mit zunehmendem Bark-Index (d.h. mit steigender Frequenz) abnehmen.

Zeitliche Verdeckung wird hier nur als Nachverdeckung realisiert. Die Vorverdeckung ist in diesem Kontext vernachlässigbar.

In einer weiteren Verarbeitungsphase werden die Spektren der Signale "verschmiert" (Fig. 2: Frequenzverschmierung 13). Dies vor dem Hintergrund, dass das menschliche Ohr unfähig ist, zwei Frequenzkomponenten, die nebeneinander stehen, deutlich zu unterscheiden. Der Grad der Frequenzverschmierung hängt von den betroffenen Frequenzen, deren Amplituden und anderen Faktoren ab.

Die Empfindungsgrösse des Ohres ist die Lautheit. Sie sagt wievielmal ein zu messender Schall lauter oder leiser als ein Standardschall ist. Die so gefundene Empfindungsgrösse wird als Verhältnislautheit bezeichnet. Als Standardschall hat sich der Schallpegel eines 1 kHz-Tones bewährt. Dem 1 kHz-Ton mit einem Pegel von 40 dB wurde die Lautheit 1 sone zugeordnet. In E. Zwicker, Psychoakustik, 1982, wird folgende Definition der Lautheitsfunktion beschrieben:

$$Lautheit = 2^{\frac{L_{1kHz} - 40}{10}} \; [dB]$$

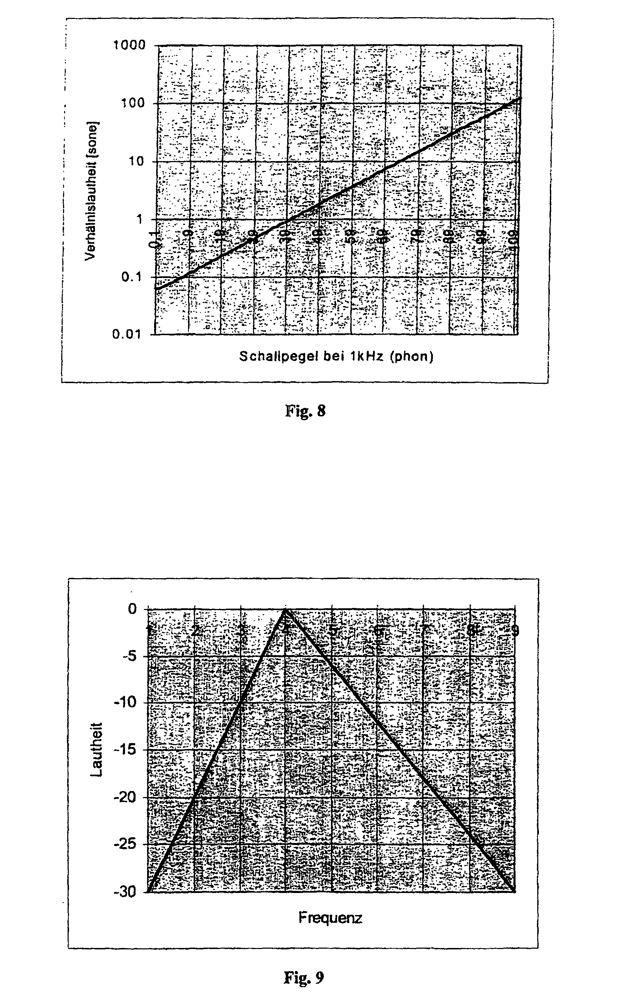

Fig. 8 zeigt eine Lautheitsfunktion (sone) für den 1 kHz-Ton als Funktion des Schallpegels (phon).

Im Rahmen des vorliegenden Ausführungsbeispiels wird diese Lautheitsfunktion wie folgt angenähert:

$$Px_i'''[j] = (Px_i''[j])^\varepsilon, \; Py_i'''[j] = (Py_i''[j])^\varepsilon \tag{14}$$

wo $\varepsilon = 4/3$.

Das Spektrum wird an dieser Stelle expandiert (Fig. 2: Lautheitsfunktionskonversion 14).

Das nun vorliegende Spektrum wird mit einer diskreten Folge von Faktoren gefaltet (Convolution). Das Resultat entspricht einem Verschmieren des Spektrums über die Frequenzachse. Convolution von zwei Sequenzen $x$ und $y$ entspricht der relativ komplizierten Faltung der Sequenzen im Zeitbereich oder dem Multiplizieren deren Fourier-Transformierten. Im Zeitbereich lautet die Formel:

$$c = conv(x,y), \qquad c(k) = \sum_{j=0}^{n-1} x(j) \cdot y(k+1-j), \tag{15}$$

wo $m$ die Länge der Sequenz $x$ und $n$ die Länge der Sequenz $y$ ist. *Das* Resultat c hat die Länge k=m+n-1. j = max(1, k+1-n) : min(k,m).

Im Frequenzbereich:

$$conv(x,y) = FFT^{-1}(FFT(x) * FFT(y)). \tag{16}$$

Anstelle von $x$ kommt im vorliegenden Beispiel das Signal $Px'''$ und $Py'''$ der Länge 17 (m=17) und anstelle von $y$ kommt die Verschmierungsfunktion $\Lambda$ der Länge 9 (n=9). Somit hat das Resultat die Länge 17+9-1=25 (k=25).

$$Ex_i = conv(Px_i''', \Lambda(f)), \qquad Ey_{i'} = conv(Py_i''', \Lambda(f)) \tag{17}$$

$\Lambda(\cdot)$ ist die Verschmierungsfunktion, deren Form in der Fig. 9 gezeigt wird. Sie ist asymmetrisch. Die linke Flanke steigt auf von einer Lautheit von -30 bei der Frequenzkomponente 1 zu einer Lautheit von 0 bei der Frequenzkomponente 4. Danach fällt sie wieder in einer geraden Linie ab auf eine Lautheit von -30 bei der Frequenzkomponente 9. Die Verschmierungsfunktion ist also eine asymmetrische Dreiecksfunktion.

Die psychoakustische Modellierung 3 (vgl. Fig. 1) ist damit abgeschlossen. Es folgt die Berechnung der Qualität.

Der Abstand zwischen den gewichteten Spektren des Quellsignals und des Empfangssignals wird wie folgt berechnet:

$$Q_{TOT} = \eta_{sp} \cdot Q_{sp} + \eta_{pu} \cdot Q_{pa}, \; \eta_{sp} + \eta_{pa} = 1 \tag{18}$$

wo $Q_{sp}$ der Abstand während der Sprachphase (aktive Signalphase) ist und $Q_{pa}$ der Abstand in der Pausenphase (inaktive Signalphase). $\eta_{sp}$ ist der Sprachkoeffizient und $\eta_{pa}$ ist der Pausenkoeffizient.

Zuerst wird die Signalanalyse vom Quellsignal durchgeführt mit dem Ziel, Signalsequenzen zu finden, wo die Sprache aktiv ist. So wird ein sogenanntes Energieprofil $En_{profile}$ gebildet nach:

$$En_{profile}(i) = \begin{cases} 1, \dots if\,(x(i) \geq SPEECH\_THR) \\ \\ 0, \dots if\,(x(i) < SPEECH\_THR) \end{cases}$$

Mit SPEECH_THR ist der Schwellenwert definiert, unter welchem die Sprache inaktiv ist. Dieser liegt meistens bei +10 db zur maximalen Dynamik des AD-Konvertors. Bei 16 Bit Auflösung ist SPEECH_THR = - 96.3 + 10 = - 86.3 db. In PACE ist SPEECH_THR = - 80 db.

Die Qualität ist indirekt proportional der Ähnlichkeit $Q_{TOT}$ von Quell- und Empfangssignal. $Q_{TOT}$ = 1 bedeutet, dass Quell- und Empfangssignal genau gleich sind. Für $Q_{TOT}$ = 0 sind diese zwei Signale gar nicht ähnlich. Der Sprach-koeffizient $\eta_{sp}$ wird nach folgender Formel berechnet:

$$\eta_{sp} = -\mu \cdot \left(\frac{\mu-1}{\mu}\right)^{P_{sp}} + \mu, \; 0 \leq P_{sp} \leq 1 \qquad (19)$$

wo $\mu$=1.01 und $Psp$ Sprachanteil ist.

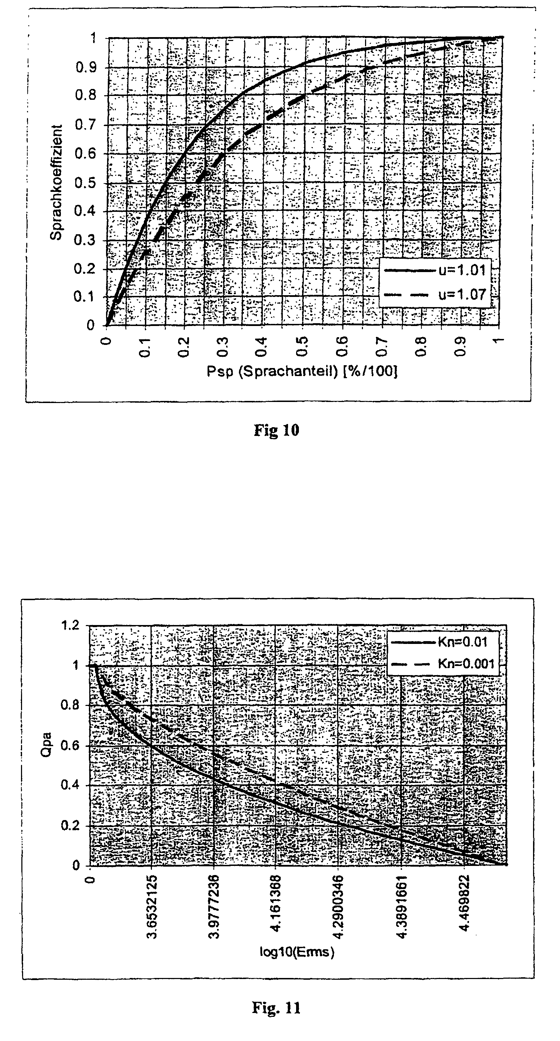

Wie die Fig. 10 zeigt, ist der Einfluss der Sprachsequenz grösser (Sprachkoeffizient grösser) wenn der Sprachanteil grösser ist. So bei $\mu$=1.01 und Psp=0.5 (50%) ist dieser Koeffizient $\eta_{sp}$ = 0.91. So ist der Einfluss der Sprachsequenz im Signal 91% und der Pausensequenz nur 9% (100-91). Bei $\mu$=1.07 ist der Einfluss der Sprachsequenz kleiner (80%).

Danach wird der Pausenkoeffizient berechnet nach:

$$\eta_{pa} = 1 - \eta_{sp} \qquad (20)$$

Die Qualität in der Pausenphase wird nicht in gleicher Weise berechnet wie die Qualität in der Sprachphase.

$Q_{pa}$ ist die Funktion der Signalenergie in der Pausenphase. Wenn diese Energie zunimmt, wird der Wert $Q_{pa}$ kleiner (was der Verschlechterung der Qualität entspricht):

$$Q_{pa} = -k_n \cdot \left(\frac{k_n+1}{k_n}\right)^{\frac{\log 10(E_{pa})}{\log 10(E_{\max})}} + k_n + 1 + m \qquad (21)$$

$k_n$ ist eine vordefinierte Konstante und hat hier den Wert 0.01. $E_{pa}$ ist die RMS-Signalenergie in der Pausenphase für das Empfangssignal. Erst wenn diese Energie grösser als die RMS-Signalenergie in der Pausenphase im Quellsignal ist, hat es einen Einfluss auf den $Q_{pa}$ Wert. Also $E_{pa} = \max(Eref_{pa}, E_{pa})$. Der kleinste $E_{pa}$ ist 2. $E_{\max}$ ist die maximale RMS-Signalenergie bei gegebener digitaler Auflösung (für 16-Bit Auflösung ist $E_{\max}$=32768). Der Wert m in der Formel (21) ist der Korrekturfaktor für $E_{pa}$=2, so dass dann $Q_{pa}$ = 1 ist. Dieser Korrekturfaktor wird so berechnet:

$$m = k_n \cdot \left(\frac{k_n+1}{k_n}\right)^{\frac{\log 10(E_{\min})}{\log 10(E_{\max})}} - k_n \qquad (22)$$

Bei $E_{\max}$ =32768, $E_{\min}$=2 und $k_n$=0.01 ist der Wert für m=0.003602. Im wesentlichen kann die Basis kn* (kn+1/kn) als geeignet gewählte Konstante A verstanden werden.

In Fig. 11 ist der Zusammenhang zwischen der RMS-Energie des Signals in der Pausenphase und $Q_{pa}$ dargestellt.

Die Qualität in der Sprachphase wird durch den "Abstand" zwischen den Spektren von Quell- und Empfangssignal bestimmt.

Zunächst werden vier Pegelfenster definiert. Fenster Nr. 1 reicht von -96.3 dB bis -70 dB, Fenster Nr. 2 von -70 dB bis -46 dB, Fenster Nr. 3 von -46 dB bis -26 dB und Fenster Nr. 4 von -26 dB bis 0 dB. Signale, deren Pegel im ersten Fenster liegen, werden als Pause interpretiert und werden bei der Berechnung von $Q_{sp}$ nicht berücksichtigt. Mit der Unterteilung in vier Pegelfenster wird eine Multiauflösung erreicht. Ähnliche Vorgänge geschehen im menschlichen Ohr. So kann der Einfluss der Störung im Signal abhängig von deren Energie gesteuert werden. Das Fenster vier, welches der höchsten Energie entspricht, wird maximal gewichtet.

Der Abstand zwischen dem Spektrum des Quellsignals und des Empfangssignals in der Sprachphase für den Sprachrahmen k und das Pegelfenster i $Q_{sp}(i,k)$ wird folgendermassen berechnet:

$$Q_{sp}(i,k) = \frac{G_{(i,k)} \cdot n \cdot \sum_{j=1}^{n} \left(Ex(k)_j - \overline{Ex(k)}\right) \cdot \left(Ey(k)_j - \overline{Ey(k)}\right)}{\sqrt{n \cdot \sum_{j=1}^{n} Ex(k)_j^2 - \left(\sum_{j=1}^{n} Ex(k)_j\right)^2} \cdot \sqrt{n \cdot \sum_{j=1}^{n} Ey(k)_j^2 - \left(\sum_{j=1}^{n} Ey(k)_j\right)^2}} \tag{23}$$

wo $Ex(k)$ das Spektrum des Quellsignals und $Ey(k)$ das Spektrum des Empfangssignals im Rahmen k ist. Mit $n$ ist die spektrale Auflösung eines Rahmens bezeichnet. Das $n$ entspricht der Anzahl Bark-Werte in einem Zeitrahmen (z.B. 17). Das mittlere Spektrum im Rahmen $k$ ist mit $\overline{E(k)}$ bezeichnet. $G_{i,k}$ ist die rahmen- und fensterabhängige Gain-Konstante, deren Wert vom Energieverhältnis $\frac{Py}{Px}$ abhängig ist.

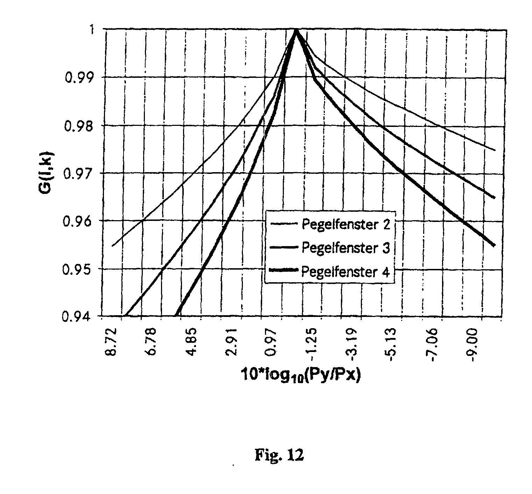

Eine grafische Darstellung des $G_{i,k}$-Wertes als Funktion des Energieverhältnisses ist in der Fig. 12 dargestellt.

Wenn dieser Verstärkungsfaktor gleich 1 ist (Energie im Empfangssignal gleich der Energie im Quellsignal) ist auch $G_{i,k}$ = 1.

Wenn die Energie im Empfangssignal gleich der Energie im Quellsignal ist, ist $G_{i,k}$ gleich 1. Dies hat keinen Einfluss auf das $Q_{sp}$. Alle anderen Werte führen zu kleineren $G_{i,k}$ bzw. $Q_{sp}$, was einem grösseren Abstand zum Quellsignal entspricht (Qualität des Empfangssignals kleiner). Wenn die Energie des Empfangssignals grösser als die des Quellsignals ist:

$$\log 10\left(\frac{Py}{Px}\right) > 1$$

verhält sich die Gain-Konstante nach der Gleichung:

$$G = 1 - \varepsilon_{HI} \cdot \left(\log 10\left(\frac{Py}{Px}\right)\right)^{0.7}.$$

Wenn dieses Energieverhältnis

$$\log 10\left(\frac{Py}{Px}\right) < 1$$

ist, dann gilt:

$$G = 1 - \varepsilon_{LO} \cdot \left(\log 10\left(\frac{Py}{Px}\right)\right)^{0.7}.$$

Die Werte für $\varepsilon_{HI}$ und $\varepsilon_{LO}$ für die einzelnen Pegelfenster können aus der folgenden Tabelle entnommen werden.

| Fenster - Nr. i | $\varepsilon_{HI}$ | $\varepsilon_{LO}$ | $\theta$ | $\gamma_{SD}$ |
|---|---|---|---|---|
| 2 | 0.05 | 0.025 | 0.15 | 0.1 |
| 3 | 0.07 | 0.035 | 0.25 | 0.3 |

(fortgesetzt)

| Fenster - Nr. i | $\varepsilon_{HI}$ | $\varepsilon_{LO}$ | $\theta$ | $\gamma_{SD}$ |
|---|---|---|---|---|
| 4 | 0.09 | 0.045 | 0.6 | 0.6 |

Die beschriebene Gain-Konstante bewirkt, dass zusätzliche Inhalte im Empfangssignal den Abstand stärker vergrössern als fehlende Inhalte.

Aus der Formel (23) ist ersichtlich, dass der Zähler der Kovarianz-Funktion entspricht und der Nenner dem Produkt von zwei Standardabweichungen. Also für den $k$-ten Rahmen und das Pegelfenster i ist der Abstand gleich:

$$Q_{sp}(i, k) = G_{(i,k)} \cdot \frac{Cov_k(Px, Py)}{\sigma_x(k) \cdot \sigma_y(k)} \tag{24}$$

Die ebenfalls aus obiger Tabelle ersichtlichen Werte $\theta$ und $\gamma_{SD}$ für jedes Pegelfenster werden benötigt, um die einzelnen $Q_{sp}(i,k)$ in ein einziges Abstandsmass $Q_{sp}$ zu transformieren.

Abhängig vom Inhalt des Signals erhält man drei $Q_{sp}(i)$ Vektoren, deren Längen unterschiedlich sein können. In einer ersten Annäherung wird der Mittelwert für das jeweilige Pegelfenster i berechnet:

$$Q_i = \frac{1}{N} \sum_{j=0}^{N} Q_{sp}(i)_j , \tag{25}$$

N ist die Länge des $Q_{sp}(i)$ Vektors bzw. die Anzahl der Sprachrahmen für das jeweilige Sprachfenster i.

Danach wird die Standard Abweichung $SD_i$ des $Q_{sp}(i)$ Vektors berechnet:

$$SD_i = \sqrt{\frac{\sum Q_{sp}(i) - (\sum Q_{sp}(i))^2}{N}}, \tag{26}$$

SD beschreibt die Verteilung der Störung im kodierten Signal. Für ein burstförmiges Rauschen, z.B. Impulsrauschen ist der SD-Wert relativ gross, für gleichverteiltes Rauschen dagegen klein. Auch das menschliche Ohr nimmt eine impulsförmige Beeinträchtigung stärker war. Ein typischer Fall sind die analogen Sprachübertragungsnetze wie z.B. AMPS.

Damit wird der Effekt der Güte der Signalverteilung folgendermassen implementiert:

$$Ksd(i) = 1 + SD_i \cdot \gamma_{SD}(i), \tag{27}$$

wobei definiert wird, dass

$$Ksd(i) = 1, \text{ für } Ksd(i) > 1$$

und

$$Ksd(i) = 0, \text{ für } Ksd(i) < 0.$$

und schliesslich

$$Q_{sd'} = Ksd(i) * Q_i, \tag{28}$$

Die Berechnung der Qualität der Sprachphase $Q_{sp}$ erfolgt nun als gewichtete Summe der einzelnen Fenster-

qualitäten gemäss

$$Q_{sp} = \sum_{i=2}^{4} U_i \cdot Qsd_i \,,$$ (29)

Die Gewichtungsfaktoren $U_i$ werden bestimmt mit

$$U_i = \eta_{sp} \cdot p_i,$$ (30)

wobei $\eta_{sp}$ der Sprachkoeffizient gemäss Formel 19 ist und $p_i$ dem gewichteten Zugehörigkeitsgrad des Signals zum Fenster i entspricht und berechnet wird mit

$$p_i = \frac{O_i}{\sum_{l=2}^{4} O_l}$$

mit

$$O_i = \frac{N_i}{N_{sp}} \cdot \theta_i.$$

$N_i$ ist die Anzahl der Sprachrahmen im Fenster i, $N_{sp}$ ist die gesamte Anzahl der Sprachrahmen und die Summe aller $\theta$ ist immer gleich 1:

$$\sum_{i=2}^{4} \theta_i = 1 \,.$$

D.h.: Je grösser der Quotient $\frac{N_i}{N_{sp}}$ oder die $\theta_i$ sind, desto mehr Bedeutung hat die Störung im jeweiligen Sprachrahmen.

Selbstverständlich können für eine signalpegelunabhängige Gainkonstante die Werte für $\varepsilon_{HI}$, $\varepsilon_{LO}$, $\theta$ und $\gamma_{SD}$ auch für jedes Fenster gleich gewählt werden.

In Fig. 2 ist der entsprechende Verarbeitungsabschnitt durch die Abstandsmassberechnung 16 dargestellt. Die Qualitätsberechnung 17 ermittelt den Wert Qtot (Formel 18).

Zu guter Letzt kommt die MOS-Berechnung 5. Diese Konvertierung ist nötig, um $Q_{TOT}$ auf der richtigen Qualitätsskala darstellen zu können. Die Qualitätsskala mit MOS-Einheiten ist in ITU T P.800 "Method for subjective determination of transmission quality", 08/96, definiert. Es wird eine statistisch relevante Zahl von Messungen durchgeführt. Dann werden alle Messwerte als einzelne Punkte in einem Diagramm dargestellt. Dann wird eine Trendkurve in der Form eines Polynoms zweiter Ordnung durch alle Punkte gezeichnet:

$$MOS_O = a \cdot (MOS_{PACE})^2 + b \cdot MOS_{PACE} + c$$ (31)

Dieser $MOSo$ Wert (MOS Objective) entspricht jetzt dem vorgegebenen MOS-Wert. Im besten Fall sind beide Werte gleich.

Das beschriebene Verfahren kann mit dedizierter Hardware und/oder mit Software verwirklicht werden. Die Formeln lassen sich ohne Schwierigkeiten programmieren. Die Verarbeitung des Quellsignals wird im voraus durchgeführt und es werden nur die Ergebnisse der Vorverarbeitung und psychoakustischen Modellierung abgespeichert. Das Empfangssignal kann z.B. on-line verarbeitet werden. Zur Durchführung der Abstandsberechnung der Signalspektren wird auf die entsprechenden abgespeicherten Werte des Quellsignals zurückgegriffen.

Das erfindungsgemässe Verfahren wurde mit verschiedenen Sprachproben unter verschiedenen Bedingungen getestet. Die Länge der Probe variierte zwischen 4 und 16 Sekunden.

Getestet wurden folgende Sprachübertragungen im realen Netz:

- normale ISDN-Verbindung.

- GSM-FR <-> ISDN und GSM-FR alleine.

- verschiedene Übertragungen über DCME -Einrichtungen mit ADPCM (G.726) bzw. LD-CELP (G.728) Codecs.

Alle Verbindungen wurden mit verschiedenen Sprachpegeln angesteuert.

In der Simulation:

- CDMA Codec (IS-95) mit verschiedenen Bitfehlerraten.

- TDMA Codec (IS-54 und IS-641) mit eingeschalteten Echo-Canceller.

- Additive Hintergrundgeräusche und verschiedene Frequenzgänge.
  Jeder Test besteht aus einer Reihe von bewerteten Sprachproben und dem zugehörigen auditiven Urteil (MOS). Die erzielte Korrelation zwischen dem erfindungsgemässen Verfahren und den auditiven Werten war sehr hoch.
  Zusammenfassend ist festzustellen, dass durch

- die Modellierung der zeitlichen Verdeckung,

- die Modellierung der Frequenz Verdeckung,

- das beschriebene Modell der Abstandsberechnung,

- die Modellierung des Abstands in der Pausenphase und

- die Modellierung den Einfluss des Energieverhältnisses auf die Qualität

ein vielseitig anwendbares und sehr gut mit der subjektiven Wahrnehmung korrelierendes Beurteilungssystem geschaffen worden ist.

**Patentansprüche**

1. Verfahren zur Durchführung einer maschinengestützten Beurteilung der Übertragungsqualität von Audiosignalen, insbesondere von Sprachsignalen, wobei in einem Frequenzbereich Spektren eines zu übertragenden Quellsignals und eines übertragenen Empfangssignals bestimmt werden, **dadurch gekennzeichnet, dass** zur Beurteilung der Übertragungsqualität ein spektraler Ähnlichkeitswert dadurch bestimmt wird, dass die Kovarianz der Spektren des Quellsignals und des Empfangssignals durch das Produkt der Standardabweichung der beiden Spektren dividiert wird.

2. Verfahren nach Anspruch 1, **dadurch gekennzeichnet, dass** der spektrale Ähnlichkeitswert mit einem Gain-Faktor gewichtet wird, welcher in Abhängigkeit von einem Verhältnis der Energien von Empfangs- und Quellsignal den Ähnlichkeitswert stärker reduziert, wenn die Energie des Empfangssignals grösser ist als die Energie im Quellsignal als wenn die Energie des Empfangssignals kleiner ist als die Energie im Quellsignal.

3. Verfahren nach Anspruch 2, **dadurch gekennzeichnet, dass** der Gain-Faktor den Ähnlichkeitswert in Abhängigkeit der Energie des Empfangssignals stärker reduziert, je höher die Energie des Empfangssignals ist.

4. Verfahren nach einem der Ansprüche 1 bis 3, **dadurch gekennzeichnet, dass** aus Quell- und Empfangssignal inaktive Phasen extrahiert werden und dass der spektrale Ähnlichkeitswert nur für die verbleibenden aktiven Phasen bestimmt wird.

5. Verfahren nach Anspruch 4, **dadurch gekennzeichnet, dass** für die inaktiven Phasen ein Qualitätswert bestimmt wird, welcher in Abhängigkeit von einer Energie Ep in den inaktiven Phasen im wesentlichen folgende Charakteristik aufweist:

$$A^{\frac{\log 10(Epa)}{\log 10(E\,\max)}}$$

6. Verfahren nach den Ansprüchen 4 und 5, **dadurch gekennzeichnet, dass** die Übertragungsqualität durch eine gewichtete Linearkombination aus dem Ähnlichkeitswert der aktiven Phase und dem Qualitätswert der inaktiven Phase berechnet wird.

7. Verfahren nach einem der Ansprüche 1 bis 6, **dadurch gekennzeichnet, dass** Quellund Empfangssignal vor deren Transformation in den Frequenzbereich jeweils so in zeitliche Rahmen aufgeteilt werden, dass die aufeinanderfolgenden Rahmen zu einem wesentlichen Teil von bis zu 50% überlappen.

8. Verfahren nach Anspruch 7, **dadurch gekennzeichnet, dass** zur Durchführung einer zeitlichen Maskierung zum Spektrum eines Rahmens jeweils das abgeschwächte Spektrum des vorangegangenen Rahmens addiert wird.

9. Verfahren nach Anspruch 8, **dadurch gekennzeichnet, dass** vor der Durchführung der zeitlichen Maskierung die Komponenten der Spektren komprimiert werden durch Potenzierung mit einem Wert $\alpha<1$.

10. Verfahren nach einem der Ansprüche 1 bis 9, **dadurch gekennzeichnet, dass** die Spektren von Quell- und Empfangssignal vor der Bestimmung des Ähnlichkeitswertes je mit einer frequenzmässig asymmetrischen Verschmierungsfunktion gefaltet werden.

11. Verfahren nach Anspruch 10, **dadurch gekennzeichnet, dass** die Komponenten der Spektren vor der Faltung expandiert werden durch Potenzierung mit einem Wert $\varepsilon>1$.

**Claims**

1. Method for executing automatic evaluation of the transmission quality of audio signals, especially of voice signals, wherein, in a frequency range, spectra of a source signal to be transmitted and of a transmitted receive signal are determined, **characterised in that** for evaluation of the transmission quality a spectral similarity value is determined by the fact that the covariance of the spectra of the source signal and receive signal is divided by the product of the standard deviation of the two spectra.

2. Method according to claim 1, **characterised in that** the spectral similarity value is weighted by a gain factor which, in dependence on a ratio of the energies of the receive signal and source signal, reduces the similarity value more severely when the energy of the receive signal is greater than the energy in the source signal, than when the energy of the receive signal is less than the energy in the source signal.

3. Method according to claim 2, **characterised in that** the higher the energy of the receive signal is, the more severely the gain factor reduces the similarity value in dependence on the energy of the receive signal.

4. Method according to one of claims 1 to 3, **characterised in that** inactive phases are extracted from the source signal and receive signal and **in that** the spectral similarity value is determined only for the remaining active phases.

5. Method according to claim 4, **characterised in that** for the inactive phases a quality value is determined which in dependence on an energy Ep in the inactive phases has substantially the following characteristic:

$$A^{\frac{\log 10\,(Epa)}{\log 10\,(E\,\max)}}$$

**EP 1 088 300 B1**

**6.** Method according to claims 4 and 5, **characterised in that** the transmission quality is calculated by means of a weighted linear combination from the similarity value of the active phase and the quality value of the inactive phase.

**7.** Method according to one of claims 1 to 6, **characterised in that** the source signal and receive signal, before their transformation into the frequency range, are each divided up into frames with respect to time in such a manner that the consecutive frames overlap to a substantial part of up to 50%.

**8.** Method according to claim 7, **characterised in that** for executing a masking with respect to time, there is in each case added to the spectrum of one frame the attenuated spectrum of the preceding frame.

**9.** Method according to claim 8, **characterised in that** before executing the masking with respect to time, the components of the spectra are compressed by raising the power with a value $\alpha<1$.

**10.** Method according to one of claims 1 to 9, **characterised in that** the spectra of the source signal and receive signal, before the determination of the similarity value, are each convoluted with a spreading function asymmetric with respect to frequency.

**11.** Method according to claim 10, **characterised in that** the components of the spectra before convolution are expanded by raising the power with a value $\varepsilon>1$.

**Revendications**

**1.** Procédé d'exécution d'une évaluation automatisée de la qualité de transmission de signaux audio, en particulier de signaux de parole, dans lequel des spectres d'un signal source à transmettre et d'un signal de réception transmis sont déterminés dans une gamme de fréquences, **caractérisé en ce que**, pour l'évaluation de la qualité de transmission, on détermine une valeur de similitude spectrale en divisant la covariance des spectres du signal source et du signal de réception par le produit de l'écart type des deux spectres.

**2.** Procédé selon la revendication 1, **caractérisé en ce que** la valeur de similitude spectrale est pondérée avec un facteur de gain, qui, en fonction d'un rapport entre les énergies du signal de réception et du signal source, effectue une réduction plus forte de la valeur de similitude quand l'énergie du signal de réception est supérieure à l'énergie dans le signal source que quand l'énergie du signal de réception est inférieure à l'énergie dans le signal source.

**3.** Procédé selon la revendication 2, **caractérisé en ce que** le facteur de gain effectue une réduction d'autant plus forte de la valeur de similitude en fonction de l'énergie du signal de réception que l'énergie du signal de réception est élevée.

**4.** Procédé selon l'une quelconque des revendications 1 à 3, **caractérisé en ce que** des phases inactives sont extraites du signal source et du signal de réception et **en ce que** la valeur de similitude spectrale est déterminée uniquement pour les phases actives restantes.

**5.** Procédé selon la revendication 4, **caractérisé en ce que**, pour les phases inactives, on détermine une valeur de qualité qui présente sensiblement la caractéristique suivante, en fonction d'une énergie Ep dans les phases inactives :

$$A^{\frac{\log 10(Epa)}{\log 10(Emax)}}$$

**6.** Procédé selon les revendications 4 et 5, **caractérisé en ce que** la qualité de transmission est calculée par une combinaison linéaire pondérée à partir de la valeur de similitude de la phase active et de la valeur de qualité de la phase inactive.

**7.** Procédé selon l'une quelconque des revendications 1 à 6, **caractérisé en ce que** le signal source et le signal de réception, avant leur transformation dans la gamme de fréquences, sont répartis respectivement en trames temporelles de telle sorte que les trames consécutives se chevauchent dans une partie substantielle allant jusqu'à 50 %.

16

8. Procédé selon la revendication 7, **caractérisé en ce que** pour l'exécution d'un masquage temporel, on additionne au spectre d'une trame chaque fois le spectre affaibli de la trame précédente.

9. Procédé selon la revendication 8, **caractérisé en ce qu'**avant l'exécution du masquage temporel, les composantes des spectres sont comprimées par élévation à une puissance avec une valeur $\alpha<1$.

10. Procédé selon l'une quelconque des revendications 1 à 9, **caractérisé en ce que** les spectres du signal source et du signal de réception, avant la détermination de la valeur de similitude, sont respectivement convolués avec une fonction d'étalement asymétrique en fréquence.

11. Procédé selon la revendication 10, **caractérisé en ce que** les composantes des spectres sont dilatées avant la convolution par élévation à une puissance avec une valeur $\varepsilon>1$.

X(i) ⟶ | 1 | ⟶ Y(i)

| 2 |

| 3 |

| 4 |

| 5 |

**Fig. 1**

| 6 | ⟶ | 7 | ⟶ | 8 | ⟶ | 9 |

| 10 | ⟶ | 11 | ⟶ | 12 | ⟶ | 13 |

| 14 | ⟶ | 15 | ⟶ | 16 | ⟶ | 17 |

| 5 | ⟶

**Fig. 2**

Fig. 3

Fig. 4

**Fig. 5**

**Fig. 6**

Fig. 7

Fig. 13

EP 1 088 300 B1

Fig. 8

Fig. 9

22

Fig 10

Fig. 11

Fig. 12